# EUROPÄISCHE PATENTSCHRIFT

(11) **EP 0 512 080 B1**
(45) Veröffentlichungstag und Bekanntmachung des Hinweises auf die Patenterteilung: **15.03.1995**
(21) Anmeldenummer: 91918104.0
(22) Anmeldetag: 15.10.1991
(51) Int. Cl.: H02K 21/12

(54) **ELEKTRISCHE MASCHINE**
ELECTRIC MOTOR
MOTEUR ELECTRIQUE

(30) Priorität: 23.11.1990 DE 4037231
(43) Veröffentlichungstag der Anmeldung: 11.11.1992
(73) Patentinhaber: J.M. Voith GmbH, D-89522 Heidenheim (DE)
(72) Erfinder: LANGE, Andreas, D-7920 Heidenheim (DE)
(74) Vertreter: Weitzel, Wolfgang, Dr.-Ing.
(86) Internationale Anmeldenummer: EP9101955
(87) Internationale Veröffentlichungsnummer: WO9210023

(56) Entgegenhaltungen:
- EP-A- 0 356 368
- DE-A- 3 705 089
- US-A- 2 427 584

## Beschreibung

Die Erfindung betrifft eine elektrische Maschine, insbesondere stromrichtergespeisten Synchronmaschine nach dem Transversalflußprinzip gemäß dem Oberbegriff des Anspruches 1. Eine nach diesem Wirkprinzip aufgebaute Maschine ist aus der DE-PS 37 05 089 bekannt.

Das sogenannte Transversalflußkonzept beruht darauf, daß die Erregung des Statorfeldes nicht in Längsrichtung der Maschine, also parallel zur Rotordrehachse erfolgt, sondern in Umfangsrichtung, d.h. entlang der Bewegungsrichtung bei Rotation des Rotors. Der Rotor umfaßt dazu mindestens eine Polstruktur aus jeweils zwei nebeneinanderliegenden Reihen aus in Umfangsrichtung wechselweise magnetisierten Permanentmagneten und Weicheisenelementen, wobei die beiden Reihen durch eine Zwischenlage aus magnetisch und elektrisch nicht leitendem Material getrennt sind. Diese Polstruktur hat im Prinzip trommelförmige Gestalt.

Der Stator besteht im wesentlichen aus zwei Teilen, nämlich einem radial außerhalb der Polstruktur angeordneten Außenstator und einem radial innerhalb der Polstruktur angeordneten Innenstator. Jeder Statorteil weist Weicheisen-Ankerelemente auf, die im wesentlichen U-förmig ausgebildet sind und deren offene Schenkel in Magneten des Rotors jeweils von radial innen bzw. radial außen her über einen Luftspalt gegenüberstehen. Zur Erregung weist die bekannte Maschine für jeden Statorteil jeweils eine in Umfangsrichtung verlaufende Ringwicklung auf.

Mit dieser, durch einfachen Wicklungsaufbau gekennzeichneten Anordnung und einer quer zur Bewegungsrichtung verlaufenden magnetischen Flußrichtung lassen sich hohe Kraftdichten erreichen, insbesondere wenn kleine Polteilungen gewählt werden. Die elektrische Zuleitung zu den beiden Ringwicklungen der Statorhälften muß durch die Ankerelemente hindurch geführt werden. Zur Abfuhr der in den Wicklungen anfallenden Wärme stehen ebenfalls nur die Zwischenräume zwischen den Ankerelementen zur Verfügung. Beim Innenstator jedoch sind die Abstände zwischen den Ankerelementen bei gleicher Polzahl und kleinerem Radius wesentlich kleiner als beim Außenstator. Die Platzverhältnisse sind daher beim Innenstator besonders ungünstig, was zu Problemen bei der Ausbildung der Leitungszuführung, des Wicklungsaufbaues und der Montage des Innenstators mit sich bringt.

Die Aufgabe der Erfindung besteht darin, den Wicklungsaufbau und die Erregung einer elektrischen Maschine der eingangs genannten Gattung so zu verbessern, daß die Leitungszuführung, die Wärmeabfuhr und Montage erleichtert sind.

Diese Aufgabe wird durch das kennzeichnende Merkmal des Anspruches 1 dadurch gelöst, daß die Erregung des Stators in eine einzige, in Umfangsrichtung verlaufenden Ringwicklung konzentriert wird, und daß diese einzige Ringwicklung nur in einer der beiden Statorhälften untergebracht ist. Die andere Statorhälfte bleibt somit frei von einer Ringwicklung und dadurch magnetisch inaktiv. Diese Statorhälfte bildet damit einen magnetischen Rückschluß zwischen den beiden Permanentmagnet-Reihen an der Polstruktur des Rotors. Diese Maßnahme bringt eine bedeutende Vereinfachung des Wicklungsaufbaues am Motor und eine beträchtlich vereinfachte Montage mit sich, verbunden mit einer gesteigerten Betriebssicherheit, insbesondere bezüglich der Standfestigkeit der Isolation bei der zu erwartenden Wärmebelastung.

Vorteilhafte Ausgestaltungen der Erfindung sind in den Unteransprüchen angegeben. Besonders vorteilhaft ist die Unterbringung der einzigen Ringwicklung im Außenstator, so daß der Innenstator frei bleiben kann von einer Wicklung. Gemäß Anspruch 3 werden die Ankerelemente des wicklungsfreien Statorteils als geblechte Rückschlußelemente, insbesondere als Schnittbandkerne ausgebildet und mit einem Abstand in Umfangsrichtung angeordnet, der der doppelten Polteilung an der Polstruktur des Rotors entspricht. Gemäß Anspruch 4 sind die Ankerelemente des die Ringwicklung aufnehmenden Statorteiles ebenfalls als Schnittbandkerne ausgebildet, die die Ringwicklung U-förmig an drei Seiten einschließen. Gemäß Anspruch 5 kann der Rotor zwei Polstrukturen aufweisen, die symmetrisch beidseitig der zentralen Scheibe angeordnet sind, wobei die beiden zugehörigen Statoren so aufgebaut sind, daß die jeweils einzigen Ringwicklungen jeweils im gleichen Statorteil angeordnet sind, also am Innenstator oder vorzugsweise am Außenstator. Diese Maßnahme gewährleistet einen ruhigen schwingungsfreien Lauf des Motors.

Ein Ausführungsbeispiel der Erfindung wird nachstehend anhand der Zeichnung beschrieben. Darin zeigt:
- Figur 1: einen schematischen Längsschnitt durch die elektrische Maschine;
- Figur 2: eine schematische Ansicht der Rotor-Polstruktur und der sie umschließenden Statorelemente.

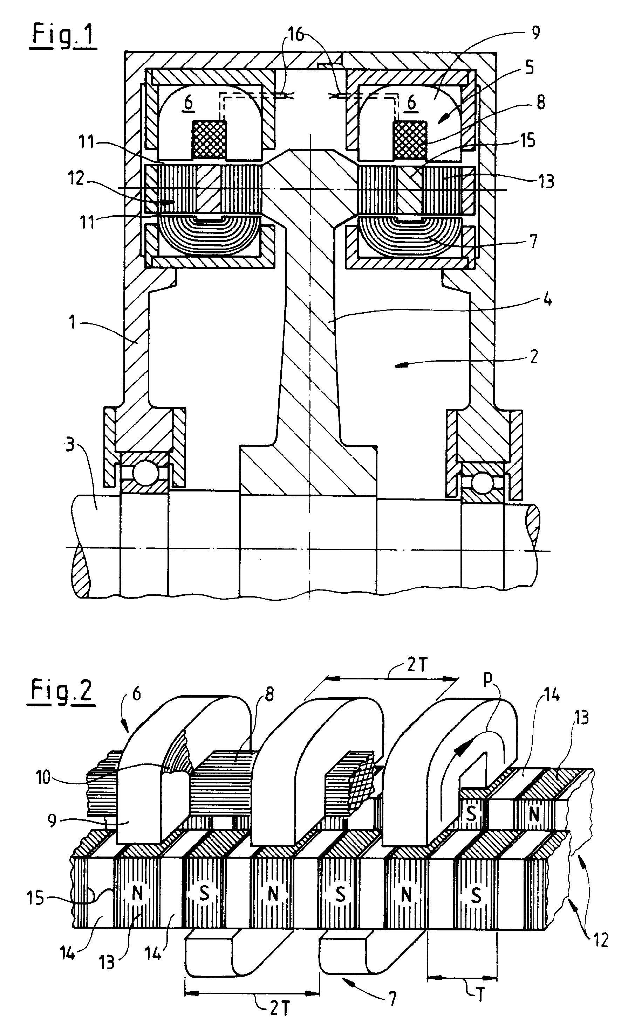

Die in Fig. 1 schematisch im Schnitt dargestellte Maschine umfaßt ein Statorgehäuse 1, in dem ein Rotor 2 mit seiner Welle 3 drehbar gelagert ist. Der Rotor besteht aus einer zentralen Scheibe 4, an deren radial äußerem Bereich symmetrisch nach beiden Seiten koaxial zur Drehachse der Welle 3 zwei Polstrukturen 12 angeordnet sind. Diese Polstrukturen umfassen Permanentmagnete 13, die in zwei Reihen in Umfangsrichtung und nebeneinanderliegend jeweils wechselweise polarisiert und Weicheisenelementen 14 benachbart sind, wobei alle Teile durch elektrisch und magnetisch nicht leitendes Material, vorzugsweise Kunststoff 15, voneinander getrennt sind. Durch die Einbettung in Kunststoff bildet die Scheibe 4 mit der Polstruktur 12, mit den Magneten 13 und Weicheisenelementen 14 (dargestellt in Fig. 2) einen in sich ausgesteiften Drehkörper. Den Polstrukturen 12 steht jeweils, getrennt durch einen Luftspalt 11, ein Stator 5 gegenüber, der aus einem radial außenliegenden Außenstator 6 und einem radial innenliegenden Innenstator 7 besteht.

Der Außenstator 6 umfaßt U-förmig ausgebildete Ankerelemente 9, deren offene Schenkel den Permanentmagneten 13 der Polstruktur 12 des Rotors gegenüberstehen. Innerhalb der Schenkel der Ankerelemente 9 befindet sich, von drei Seiten umschlossen, eine in Umfangsrichtung verlaufende Ringwicklung 8. Der Innenstator 7 ist frei von einer Ringwicklung und bildet lediglich zwischen den Permanentmagneten 13 auf der radial innenliegenden Seite den magnetischen Rückschluß für die Statorerregung, nämlich in einer radialen Ebene (Transversalflußprinzip).

Die Fig. 2 zeigt in schematischer Ansicht und in gestreckter Lage einen Ausschnitt aus der Polstruktur 12 des Rotors und die sie umgebenden Statorteile 6, 7. Zu erkennen sind die beiden Reihen von hintereinander angeordneten Permanentmagneten 13 und Weicheisenelementen 14, die jeweils durch eine magnetisch und elektrisch nicht leitende Trennschicht 15 in Umfangsrichtung zusammengefaßt sind. Die Permanentmagnete 13 der einen Reihe sind gegenüber denen der anderen Reihe in unterschiedlicher Richtung gepolt, so daß eine magnetische Flußrichtung gemäß dem Richtungspfeil P entsteht. Die beiden Reihen von Permanentmagneten 13 mit Weicheisenelementen 14 sind auch quer zur Umfangsrichtung mit magnetisch und elektrisch nicht leitendem Material, vorzugsweise Kunststoff, voneinander getrennt (nicht dargestellt), aber dennoch tragfähig miteinander verbunden.

Zu erkennen ist ferner, daß der Außenstator 6 Weicheisen-Ankerelemente 9 aufweist, die in Umfangsrichtung im Abstand 2T voneinander angeordnet sind. Die Ankerelemente 9 sind als Schnittbandkerne 10, also in geblechter Ausführung ausgebildet. Dasselbe betrifft auch die radial innerhalb der Polstruktur 12 angeordneten Ankerelemente des Innenstators 7, dargestellt in Fig. 1. Die Ankerelemente 9 des Außenstators sind gegenüber den Ankerelementen des Innenstators um die Polteilung T in Umfangsrichtung versetzt. Die Polteilung T ist gegeben durch die Dicke der Permanentmagnete 13 und der Weicheisenelemente 14 samt der dazugehörigen Isolierschichten 15. Auch die Ankerelemente des Innenstators 7 sind in Umfangsrichtung mit doppelter Polteilung T beabstandet, was bei dem kleineren Radius der Ankerelemente am Innenstator einem kleineren Absolutwert der Zwischenräume entspricht. Von Vorteil ist daher, die Ringwicklung 8 am Außenstator 6 anzuordnen, wobei die elektrische Zuleitung 16 zu dieser Ringwicklung vorzugsweise im radial äußeren Bereich zwischen den Ankerelementen 9 hindurchgeführt ist. Auf diese Weise ist es möglich, die Maschine mit kleinen Werten für die Polteilung T auszubilden und dadurch hohe Kraftdichten zu erzeugen. Dennoch sind mit dieser Maßnahme Montageschwierigkeiten, komplizierter Wicklungsaufbau für den Innenstator und hohe Wärmebelastung vermieden.

## Patentansprüche

1. Elektrische Maschine, insbesondere stromrichtergespeiste Synchronmaschine, mit den folgenden Merkmalen:
a) ein Rotor (2) umfaßt eine in einem Statorgehäuse (1) gelagerte Rotorwelle (3) mit einer darauf drehstarr befestigten und sich im wesentlichen radial erstreckenden kreisrunden zentralen Scheibe (4), an deren radial äußerem Umfang mindestens eine zur Rotordrehachse koaxiale ringförmige Polstruktur (12) angeordnet ist;
b) jede Polstruktur (12) umfaßt jeweils zwei nebeneinanderliegende, durch eine Zwischenlage aus magnetisch und elektrisch nicht leitendem Material getrennte Reihen aus in Umfangsrichtung wechselweise magnetisierten Permanentmagneten (13) mit dazwischenliegenden Weicheisenelementen (14);
c) jeder Polstruktur (12) des Rotors (2) steht ein Stator (5) gegenüber, der aus zwei Teilen besteht, nämlich einem radial außerhalb der Polstruktur (12) angeordneten Außenstator (6) und einem radial innerhalb der Polstruktur (12) angeordneten Innenstator (7);
d) die Erregung des Stators (5) erfolgt durch eine Ankerwicklung, und jeder Statorteil (6, 7) umfaßt Ankerelemente (9), die im wesentlichen U-förmig ausgebildet und mit ihren offenen Schenkeln der Polstruktur (12) des Rotors (2) zugewandt sind;
dadurch gekennzeichnet, daß
e) die Erregung der Ankerelemente (9) des Stators (5) auf eine einzige Ringwicklung (8) in einem der beiden Statorteile (6, 7) konzentriert ist, wobei der andere Statorteil frei ist von einer Erregerwicklung.

2. Elektrische Maschine nach Anspruch 1, dadurch gekennzeichnet, daß die Ringwicklung (8) im Außenstator (6) untergebracht ist.

3. Elektrische Maschine nach Anspruch 1 oder 2, dadurch gekennzeichnet, daß der wicklungsfreie Statorteil geblechte Rückschlußelemente aufweist, die als Schnittbandkerne (10) ausgebildet und mit einem Abstand in Umfangsrichtung angeordnet sind, der der doppelten Polteilung (T) an der Polstruktur (12) des Rotors (2) entspricht.

4. Elektrische Maschine nach einem der Ansprüche 1 bis 3, dadurch gekennzeichnet, daß der die Ringwicklung (8) aufnehmende Statorteil als Ankerelemente eine sich in Umfangsrichtung erstreckende Reihe von Schnittbandkernen (10) aufweist, die die Ringwicklung (8) U-förmig an drei Seiten umschließen.

5. Elektrische Maschine nach einem der Ansprüche 1 bis 4, dadurch gekennzeichnet, daß der Rotor (2) symmetrisch zu beiden Seiten der zentralen Scheibe (4) jeweils eine Polstruktur (12) aufweist, und daß die beiden zugehörigen Statoren (5) so aufgebaut sind, daß die Ringwicklungen (8) jeweils im gleichen Statorteil (6) angeordnet sind.

## Claims

1. An electric machine, in particular a synchronous machine fed by a rectifier and having the following features:
a) a rotor (2) comprising a rotor shaft (3) mounted in a stator housing (1) and having, mounted rigidly thereon, a circular central substantially radially extending disc (4), on the radially outer periphery of which there is arranged at least one annular pole structure (12) coxial to the axis of rotation of the rotor;
b) each pole structure (12) respectively comprises two rows, arranged side by side and separated by an intermediate layer of magnetically and electrically non-conductive material, of permanent magnets (13) which are alternately magnetised in peripheral direction and which have interposed soft-iron elements (14);
c) a stator (5) is situated opposite each pole structure (12) of the rotor (2), which stator is composed of two parts, namely an outer stator (6) disposed radially outside the pole structure (12) and an inner stator (7) disposed radially inside the pole structure (12);
d) the excitation of the stator (5) is effected by an armature winding, and each stator part (6, 7) comprises armature elements (9) which are substantially U-shaped and which with their open limbs are turned towards the pole structure (12) of the rotor (2);
characterised in that
e) the excitation of the armature elements (9) of the stator (5) is concentrated on a single annular winding (8) in one of the two stator parts, the other stator part being free of an excitation winding.

2. An electric machine according to Claim 1,
characterised in that the annular winding (8) is accommodated in the outer stator (6).

3. An electric machine according to Claim 1 or 2,
characterised in that the stator part without winding has laminated short-circuit elements which are in the form of sectional strip cores (10) and are disposed at a distance apart in peripheral direction, which corresponds to double the pole spacing (T) in the pole structure (12) of the rotor (2).

4. An electric machine according to any one of Claims 1 to 3, characterised in that the stator part accommodating the annular winding (8) has as armature elements a row of sectional strip cores (10) extending in peripheral direction, which enclose the annular winding (8) in U-shape on three sides.

5. An electric machine according to any one of Claims 1 to 4, characterised in that symmetrically on both sides of the central disc (4) the rotor (2) has a respective pole structure (12), and that the two associated stators (5) are so formed that the annular windings (8) are each arranged in the same stator part (6).

## Revendications

1. Machine électrique, en particulier machine synchrone alimentée par un convertisseur,présentant les particularités suivantes suivantes:
a) un rotor (2) comprend un arbre de rotor (3) monté dans une carcasse (1) de stator avec un disque central circulaire (4) qui est fixé sur ledit arbre avec blocage en rotation et qui s'étend essentiellement selon la direction radiale, une structure polaire annulaire (12) coaxiale à l'axe de rotation du rotor étant disposée à la périphérie extérieure en direction radiale dudit disque;
b) chaque structure polaire (12) comprend deux rangées disposées l'une à côté de l'autre, séparées par une couche intermédiaire en matière non conductrice du point de vue électrique et magnétique et constituées d'aimants permanents (13) magnétisés de manière alternée selon la direction périphérique avec des éléments en fer doux (14) interposés;
c) à chaque structure polaire (12) du rotor (2) est opposée un stator (5) qui est constitué de deux parties, à savoir un stator extérieur (6) disposé à l'extérieur de la structure polaire (12) en direction radiale et un stator intérieur (7) disposé à l'intérieur de la structure polaire (12) en direction radiale;
d) l'excitation du stator (5) est réalisée au moyen d'un enroulement d'induit et chaque partie de stator (6,7) comprend des éléments d'induit (9) qui sont conformés essentiellement en forme de U et dont les branches latérales sont tournées vers la structure polaire (12) du rotor (2);
caractérisée en ce que
e) le dispositif d'excitation des éléments d'induit (9) du stator (5) est concentré dans un seul enroulement annulaire (8) logé dans une des deux parties (6,7) de stator, l'autre partie de stator étant exempte d'enroulement d'excitation.

2. Machine électrique selon la revendication 1, caractérisée en ce que l'enroulement annulaire (8) est logé dans le stator extérieur (6).

3. Machine électrique selon l'une des revendications 1 ou 2, caractérisée en ce que la partie de stator exempte d'enroulement comporte des éléments feuilletés de fermeture de flux, qui sont réalisés sous la forme de tores enroulés fendus (10) et disposés selon la direction périphérique avec un écartement qui correspond au double du pas polaire (T) sur la structure polaire (12) du rotor (2).

4. Machine électrique selon l'une quelconque des revendications 1 à 3, caractérisée en ce que la partie de stator renfermant l'enroulement annulaire (8) comporte, en tant qu'éléments d'induit, une rangée, s'étendant selon la direction périphérique, de tores enroulés fendus (10) qui enferment l'enroulement annulaire (8) en forme de U sur trois côtés.

5. Machine électrique selon l'une quelconque des revendications 1 à 4, caractérisée en ce que le rotor (2) comporte, de manière symétrique des deux côtés du disque central (4), à chaque fois, une structure polaire (12) et en ce que les deux stators associés (5) sont construits de telle manière que les enroulements annulaires sont disposés, à chaque fois, dans la même partie (6) de stator.
